# EUROPEAN PATENT APPLICATION

(11) **EP 4 706 856 A1**
(43) Date of publication of application: **11.03.2026**
(21) Application number: 24315413.5
(22) Date of filing: 09.09.2024
(51) Int. Cl.: B23C 5/22

(54) **CUTTING TOOL**

(71) Applicant: Seco Tools AB, 737 82 Fagersta (SE)
(72) Inventor: Patriarca, Benoît, 18000 Bourges (FR); Derimay, Pascal, 18000 Bourges (FR); Delorme, Anthony, 18000 Bourges (FR); Bonenfant, Antoine, 18000 Bourges (FR)
(74) Representative: Sandvik

(57) **Abstract**

A cutting tool comprising a tool body (2) with at least one insert seat (10), an indexable first cutting insert with round basic shape and an indexable second cutting insert (30') with round basic shape releasably mountable, one at a time, in the insert seat. At least one rotation-preventing surface (20a, 20b) is provided in the insert seat (10) and configured to co-operate with planar indexing surfaces on the first cutting insert to prevent it from rotating in the insert seat. A rotation-preventing member (22) is releasably mountable in the insert seat (10) and configured to co-operate with indexing recesses (42) on the second cutting insert (30') to prevent it from rotating in the insert seat. The rotation-preventing member (22) is removable from the insert seat to allow the first cutting insert to be mounted in the insert seat without being obstructed by the rotation-preventing member.

## Description

### FIELD OF THE INVENTION AND PRIOR ART

The present invention relates to a cutting tool according to the preamble of claim 1.

A cutting tool, for instance in the form of a milling tool or turning tool, may be provided with one or more cutting inserts detachably mounted in a respective insert seat in a tool body of the cutting tool. Each individual cutting insert may be provided with a circular cutting edge, as illustrated for instance in US 6 053 671 A, US 9 095 909 B2 and EP 3 643 439 A1, wherein the cutting insert has a rake face and an abutment face arranged on opposite sides of the cutting insert and a peripheral surface that extends around the cutting insert between the rake face and the abutment face, and wherein the circular cutting edge is formed at an intersection between the rake face and the peripheral surface. A cutting insert of this type with a circular cutting edge is normally configured to abut against a tangentially facing bottom wall in an insert seat trough the abutment face and against one or more curved side support surfaces on an internal wall of the insert seat through a conical side abutment surface included in the peripheral surface of the cutting insert.

Different working positions, or indexing positions, of a cutting insert of the above-mentioned type with a circular cutting edge may be defined by several planar indexing surfaces included in the peripheral surface of the cutting insert and distributed about the centre axis of the cutting insert, as illustrated in US 6 053 671 A and US 9 095 909 B2. In each working position of the cutting insert, at least one of said indexing surfaces is positioned closely in front of a corresponding planar surface on the internal wall of the insert seat. By its co-operation with the indexing surfaces on the cutting insert, said planar surface on the internal wall of the insert seat assists in defining the different working positions of the cutting insert in the insert seat and also prevents the cutting insert from rotating in the insert seat out of its prevailing working position when the cutting insert is subjected to high cutting forces during machining that tend to rotate the cutting insert in the insert seat. However, in applications where the cutting insert is subjected to cutting forces orientated such that the resulting torque, which tends to rotate the cutting insert in the insert seat, is very high, this type of rotation-preventing solution has inadequate performance.

Different working positions, or indexing positions, of a cutting insert of the above-mentioned type with a circular cutting edge may as an alternative be defined by several indexing recesses included in the peripheral surface of the cutting insert and distributed about the centre axis of the cutting insert, as illustrated in EP 3 643 439 A1. In each working position of the cutting insert, at least one of said indexing recesses is positioned in front of a protrusion on the internal wall of the insert seat with at least a part of the protrusion received in the indexing recess in question. By its co-operation with the indexing recesses on the cutting insert, said protrusion on the internal wall of the insert seat assists in defining the different working positions of the cutting insert in the insert seat and also prevents the cutting insert from rotating in the insert seat out of its prevailing working position when the cutting insert is subjected to high cutting forces during machining that tend to rotate the cutting insert in the insert seat. This type of rotation-preventing solution may provide an interlocking between the cutting insert and the insert seat that efficiently prevents a rotation of the cutting insert in the insert seat, also in applications where the cutting insert is subjected to cutting forces orientated such that the resulting torque, which tends to rotate the cutting insert in the insert seat, is very high. However, the provision of the indexing recesses in the cutting insert causes an undesirable weakening of the cutting insert due to the material removal required to form these recesses.

### OBJECT OF THE INVENTION

The object of the present invention is to provide a cutting tool of the above-mentioned type that has a new and favourable design.

### SUMMARY OF THE INVENTION

According to the invention, said object is achieved by means of a cutting tool having the features defined in claim 1.

The cutting tool according to the invention comprises:
- a tool body;
- at least one insert seat provided in the tool body and comprising a space configured to accommodate an indexable cutting insert, this space being delimited by a tangentially facing bottom wall and an internal wall that extends transversely to the bottom wall, wherein at least one planar, or at least substantially planar, rotation-preventing surface is provided on this internal wall; and
- at least one indexable first cutting insert and at least one indexable second cutting insert releasably mountable, one at a time, in said at least one insert seat, wherein each cutting insert of said at least one indexable first cutting insert and said at least one indexable second cutting insert is mountable in different working positions in said at least one insert seat and comprises:
   - a rake face and an abutment face arranged on opposite sides of the cutting insert, the cutting insert having a centre axis that extends between the rake face and the abutment face, wherein the cutting insert, when mounted in said at least one insert seat in any of its working positions, is configured to abut against the bottom wall of said space in the insert seat through the abutment face,
   - a peripheral surface extending around the cutting insert between the rake face and the abutment face,
   - a circular cutting edge formed at an intersection between the peripheral surface and the rake face and extending around the centre axis of the cutting insert along a periphery of the rake face, and
   - a conical or cylindrical side abutment surface included in the peripheral surface and extending around the centre axis of the cutting insert, wherein this conical or cylindrical side abutment surface is concentric with the centre axis of the cutting insert and included in a first part of the peripheral surface that is adjacent to and adjoins to the rake face, and wherein the cutting insert, when mounted in said at least one insert seat in any of its working positions, is configured to abut against one or more side support surfaces on the internal wall of said space in the insert seat through the conical or cylindrical side abutment surface.

Several planar, or at least substantially planar, indexing surfaces are included in the peripheral surface of said at least one indexable first cutting insert and distributed about the centre axis of the cutting insert, these indexing surfaces being included in a second part of the peripheral surface that is located between said first part of the peripheral surface and the abutment face. When mounted in the insert seat in any of its working positions, the indexable first cutting insert is configured to be positioned with one of said indexing surfaces in front of and facing said at least one rotation-preventing surface on the internal wall of said space in the insert seat, wherein the indexing surface facing this rotation-preventing surface is configured to be out of contact with the rotation-preventing surface when the cutting insert is in a mounting position in said space with the indexing surface substantially in parallel with the rotation-preventing surface and configured to come into stopping contact with the rotation-preventing surface when the cutting insert is subjected to a rotation in said space from said mounting position in any direction about its centre axis such that the cutting insert is prevented from rotating in said space out of its prevailing working position by this stopping contact.

Several indexing recesses are provided in the peripheral surface of said at least one indexable second cutting insert and distributed about the centre axis of the cutting insert, these indexing recesses being provided in a second part of the peripheral surface that is located between said first part of the peripheral surface and the abutment face. In addition to said at least one rotation-preventing surface, the cutting tool also comprises at least one rotation-preventing member releasably mountable in said at least one insert seat, wherein this rotation-preventing member comprises an externally threaded shaft and a protruding part fixed to the shaft, wherein the shaft is configured for threaded engagement with an internally threaded hole provided in the insert seat, and wherein the protruding part is configured to extend into said space in the insert seat when the rotation-preventing member is mounted to the insert seat with the shaft in threaded engagement with said internally threaded hole in the insert seat. The threaded shaft and the protruding part of the rotation-preventing member are preferably formed in one piece. Furthermore, the protruding part of the rotation-preventing member preferably has a radially peripheral surface with a circular cylindrical shape. When mounted in the insert seat in any of its working positions, the indexable second cutting insert is configured to be positioned with one of said indexing recesses in front of and facing the protruding part of the rotation-preventing member, wherein the protruding part is configured to extend into the indexing recess facing the protruding part and is configured to come into stopping contact with an internal surface of this indexing recess when the cutting insert is subjected to a rotation in said space in any direction about its centre axis such that the cutting insert is prevented from rotating in said space out of its prevailing working position by this stopping contact.

According to the invention, the above-mentioned rotation-preventing member is removable from the insert seat to thereby allow said at least one indexable first cutting insert to be mounted in the insert seat without being obstructed by this rotation-preventing member. Thus, when the rotation-preventing member is removed from the insert seat, an indexable cutting insert provided with planar indexing surfaces may be mounted in the insert seat, wherein the different working positions of the cutting insert in the associated insert seat are defined by the co-operation between the indexing surfaces on the cutting insert and the rotation-preventing surface or surfaces on the internal wall of said space in the insert seat, and wherein the cutting insert is also prevented from rotating in said space out of its prevailing working position by the co-operation between the indexing surfaces on the cutting insert and the rotation-preventing surface or surfaces on said internal wall.

When a rotation-preventing member with the above-mentioned configuration is mounted in the insert seat, an indexable cutting insert provided with indexing recesses, instead of planar indexing surfaces, may be mounted in the insert seat, wherein the different working positions of the cutting insert in the associated insert seat are defined by the co-operation between the indexing recesses on the cutting insert and the rotation-preventing member in the insert seat, and wherein the cutting insert is also prevented from rotating in the insert seat out of its prevailing working position by the co-operation between the indexing recesses on the cutting insert and the rotation-preventing member in the insert seat.

Thus, in dependence on the intended application, i.e. in dependence on the specific characteristics of the intended type of machining, one and the same tool body may, at the choice of the tool operator, be used either with cutting inserts having planar indexing surfaces or with cutting inserts having indexing recesses, which in its turn leads to a reduction in the number of required tool bodies and the associated costs. The tool body may be used with cutting inserts having planar indexing surfaces in applications where the strength of the cutting inserts is essential, and with cutting inserts having indexing recesses in applications where a strong and efficient rotation-preventing interlocking between each cutting insert and the associated insert seat is essential.

When the cutting tool is a rotary cutting tool, such as a milling tool, the expression "substantially tangentially facing bottom wall" refers to a bottom wall with a surface normal extending in a direction that is substantially tangential to the rotating tool body.

In contrast, when the cutting tool is a turning tool, the expression "substantially tangentially facing bottom wall" refers to a bottom wall with a surface normal extending in a direction that is substantially tangential to a rotating workpiece that is being machined by the cutting tool.

Said at least one insert seat and the associated first and second indexable cutting inserts to be mounted, one at a time, in the insert seat may be so adapted to each other that each one of the first and second indexable cutting inserts is mounted to the insert seat with an axial tipping-in angle in an interval from -20° to 30°, i.e. with a negative, neutral or positive axial tipping-in angle, and with a radial tipping-in angle in an interval from -20° to 10°, i.e. with a negative, neutral or positive radial tipping-in angle. The above-mentioned substantially tangentially facing bottom wall of the cutting insert accommodating space in the insert seat may be arranged in a completely tangential position in the tool body, i.e. with a surface normal that extends in a tangential direction of the tool body. However, the substantially tangentially facing bottom wall of the cutting insert accommodating space in the insert seat may as an alternative be slightly inclined, for instance in correspondence with an axial tipping-in angle of the cutting insert in an interval from -20° to 30° and/or radial tipping-in angle of the cutting insert in an interval from -20° to 10°.

According to an embodiment of the invention, the second part of the peripheral surface of said at least one indexable second cutting insert has such shape that, in each plane that is parallel to the bottom wall of said space in said at least one insert seat and intersects said at least one rotation-preventing surface of the insert seat, the following condition is fulfilled: 0.8D1_{IC}≤D2_{CC}≤D1_{IC}+2X, preferably 0.9D1_{IC}≤D2_{CC}≤D1_{IC}+2X, more preferably D1_{IC}≤D2_{CC}≤D1_{IC}+2X, where:
- D2_{CC} is the diameter of a circumscribed circle of a cross-section of the second part of the peripheral surface of said at least one indexable second cutting insert, as seen in the plane in question when said at least one indexable second cutting insert is mounted in said at least one insert seat in any of its working positions,
- D1_{IC} is the diameter of an inscribed circle of a cross-section of the second part of the peripheral surface of said at least one indexable first cutting insert, as seen in the plane in question when said at least one indexable first cutting insert is mounted in said at least one insert seat in any of its working positions, and
- X is the perpendicular distance between said at least one rotation-preventing surface of said at least one insert seat and the indexing surface of said at least one indexable first cutting insert facing this rotation-preventing surface, when said at least one indexable first cutting insert is in a mounting position in said space in the insert seat with the indexing surface substantially in parallel with the rotation-preventing surface.

Hereby, it is ensured that there is no contact between the peripheral surface of the indexable second cutting insert and said rotation-preventing surface or surfaces provided on the internal wall of the cutting insert accommodating space in the insert seat when the indexable second cutting insert is mounted in the insert seat in any of its working positions.

According to another embodiment of the invention, each one of the indexing surfaces included in the peripheral surface of said at least one indexable first cutting insert adjoins to the abutment face of the cutting insert along a lower edge of the indexing surface. Thus, in this case, all indexing surfaces extend all the way down to the abutment face of the cutting insert.

According to another embodiment of the invention, each one of the indexing recesses provided in the peripheral surface of said at least one indexable second cutting insert opens into the abutment face of the cutting insert. Thus, in this case, all indexing recesses extend all the way down to the abutment face of the cutting insert.

According to another embodiment of the invention, each one of the indexing surfaces included in the peripheral surface of said at least one indexable first cutting insert adjoins to the conical or cylindrical side abutment surface of the cutting insert via an annular transition surface included in the peripheral surface of the cutting insert, wherein this transition surface extends around and is concentric with the centre axis of the cutting insert, and wherein this transition surface, as seen in any cross-sectional plane that is perpendicular to the centre axis of the cutting insert and intersects the transition surface, has a circumscribed circle, the diameter of which increasing with increasing distance of the cross-sectional plane from the abutment face of the cutting insert. Said circumscribed circle is the circumscribed circle of a cross-section of the transition surface. Thus, a seen in a cross-sectional plane, the transition surface is inscribed in this circumscribed circle, which is concentric with the centre axis of the cutting insert. It has been observed that the indexable first cutting insert can be manufactured with greater precision with respect to its shape when an upper part of the cutting insert with the conical or cylindrical side abutment surface and a lower part of the cutting insert with the indexing surfaces are distinctly separated from each other by an intermediate part with the above-mentioned transition surface, since a compaction of carbide powder in the upper part of the cutting insert is then less influenced and disturbed by the differing shape of the lower part of the cutting insert. In the corresponding manner, a compaction of carbide powder in the lower part of the cutting insert is then less influenced and disturbed by the differing shape of the upper part of the cutting insert. During a subsequent sintering of the cutting insert, this more even compaction of the carbide powder in the upper and lower parts of the cutting insert will result in a higher precision with respect to the shape of the conical or cylindrical side abutment surface and with respect to the shape of the indexing surfaces.

According to another embodiment of the invention, said side abutment surface of said at least one indexable first cutting insert is conical and forms part of an imaginary cone, wherein said second part of the peripheral surface of the cutting insert is in its entirety located inside this imaginary cone and is spaced at a distance from the lateral surface of this imaginary cone. Thus, in this case, the second part of the peripheral surface with the indexing surfaces is recessed in relation to the first part of the peripheral surface with the conical side abutment surface, which in its turn implies that said rotation-preventing surface or surfaces provided on the internal wall of the cutting insert accommodating space in the insert seat will have a somewhat protruding position on the internal wall and thereby will be easily accessible and easier to machine.

According to another embodiment of the invention, said side abutment surface of said at least one indexable second cutting insert is conical and forms part of an imaginary cone, wherein said second part of the peripheral surface of the cutting insert is in its entirety located inside this imaginary cone and is spaced at a distance from the lateral surface of this imaginary cone. Thus, in this case, the second part of the peripheral surface with the indexing recesses is recessed in relation to the first part of the peripheral surface with the conical side abutment surface. It has been observed that the indexable second cutting insert can be manufactured with greater precision with respect to its shape when an upper part of the cutting insert with the conical or cylindrical side abutment surface and a lower part of the cutting insert with the indexing recesses are distinctly separated from each other, since a compaction of carbide powder in the upper part of the cutting insert is then less influenced and disturbed by the differing shape of the lower part of the cutting insert. In the corresponding manner, a compaction of carbide powder in the lower part of the cutting insert is then less influenced and disturbed by the differing shape of the upper part of the cutting insert. During a subsequent sintering of the cutting insert, this more even compaction of the carbide powder in the upper and lower parts of the cutting insert will result in a higher precision with respect to the shape of the conical or cylindrical side abutment surface and with respect to the shape of the indexing recesses.

The indexing surfaces included in the peripheral surface of said at least one indexable first cutting insert are preferably 4-10 in number, more preferably 4-8 in number, and equally distributed about the centre axis of the cutting insert. The number of the indexing recesses provided in the peripheral surface of said at least one indexable second cutting insert is preferably the same as or lower than the number of the indexing surfaces included in the peripheral surface of said at least one indexable first cutting insert. Furthermore, the indexing recesses provided in the peripheral surface of said at least one indexable second cutting insert are preferably equally distributed about the centre axis of the cutting insert.

Another embodiment of the invention is characterized in:
- that a planar, or at least substantially planar, first rotation-preventing surface and a planar, or at least substantially planar, second rotation-preventing surface are provided at a distance from each other on the internal wall of said space in said at least one insert seat, wherein said first and second rotation-preventing surfaces are non-coplanar with each other; and
- that said at least one indexable first cutting insert, when mounted in said at least one insert seat in any of its working positions, is configured to be positioned with one of said indexing surfaces in front of and facing said first rotation-preventing surface on the internal wall of said space in the insert seat and another one of said indexing surfaces in front of and facing said second rotation-preventing surface on the internal wall of said space in the insert seat, the indexing surface facing said first rotation-preventing surface and the other indexing surface facing said second rotation-preventing surface both being configured to be out of contact with the associated rotation-preventing surface when said at least one indexable first cutting insert is in a mounting position in said space with the indexing surface substantially in parallel with the associated rotation-preventing surface and being configured to come into stopping contact with the associated rotation-preventing surface when the cutting insert is subjected to a rotation in said space from said mounting position in any direction about its centre axis such that said at least one indexable first cutting insert is prevented from rotating in said space out of its prevailing working position by this stopping contact.

By incorporating two separate rotation-preventing surfaces on the internal wall of the cutting insert accommodating space in the insert seat, the rotation-preventing effect is enhanced.

The above-mentioned first and second rotation-preventing surfaces of said at least one insert seat are preferably so arranged in relation to each other that, in any plane that is parallel to the bottom wall of said space in the insert seat and intersects the first and second rotation-preventing surfaces, the first and second rotation-preventing surfaces extend at an angle of 90° to each other. In this case, the indexing surfaces included in the peripheral surface of said at least one indexable first cutting insert are preferably 4 or 8 in number and equally distributed about the centre axis of the cutting insert.

According to another embodiment of the invention, said at least one rotation-preventing member, when mounted in said at least one insert seat, is located between the above-mentioned first and second rotation-preventing surfaces of the insert seat, as seen in a direction in said space in the insert seat corresponding to a circumferential direction of the peripheral surface of said at least one second cutting insert when mounted in the insert seat in any of its working positions. Thus, in this case, first and second rotation-preventing surfaces are located on either side of the rotation-preventing member when the rotation-preventing member is mounted in the insert seat. Thanks to this, the dimensioning of the at least one rotation-preventing member and the first and second rotation-preventing surfaces can be done more freely.

According to another embodiment of the invention, the second part of the peripheral surface of said at least one indexable first cutting insert, as seen in any cross-sectional plane that is perpendicular to the centre axis of the cutting insert and intersects said indexing surfaces, has a substantially regular polygon shape with main sides formed by a respective one of the indexing surfaces and with chamfered or rounded corners between the main sides. In this case, the abutment face of said at least one indexable first cutting insert preferably has a corresponding regular polygon shape as seen in a plan view along the centre axis of the cutting insert.

Another embodiment of the invention is characterized in:
- that the tool body has a front end and an opposite rear end, the rear end being configured for attachment to a machine, wherein a longitudinal centre axis of the tool body extends between the rear end and the front end of the tool body and wherein the tool body has an axially forwardly facing front face at its front end and a peripheral surface that adjoins to the front face and extends from the front face towards the rear end of the tool body; and
- that said at least one insert seat is provided in the tool body at a transition between the front face and the peripheral surface of the tool body, wherein said space in said at least one insert seat is:
   - open towards the front face of the tool body in order to allow any one of said at least one indexable first cutting insert and said at least one indexable second cutting insert, when mounted in said at least one insert seat in any of its working positions, to project in the axial direction of the tool body beyond the front end thereof, and
   - also open towards the peripheral surface of the tool body in order to allow any one of said at least one indexable first cutting insert and said at least one indexable second cutting insert, when mounted in said at least one insert seat in any of its working positions, to project in the radial direction of the tool body beyond the peripheral surface thereof.

According to another embodiment of the invention, said at least one rotation-preventing member, when mounted in said at least one insert seat, is located radially inwardly of one of the above-mentioned first and second rotation-preventing surfaces of the insert seat and axially rearwardly of the other one of the above-mentioned first and second rotation-preventing surfaces of the insert seat. That the rotation-preventing member is located axially rearwardly of a rotation-preventing surface implies that it is located closer to the rear end of the tool body than the rotation-preventing surface in question.

According to another embodiment of the invention, said one or more side support surfaces on the internal wall of said space in said at least one insert seat are two in number and consist of a substantially axially facing first side support surface and a substantially radially facing second side support surface. As an alternative, said one or more side support surfaces on the internal wall of said space in said at least one insert seat may consist of one single curved side support surface of sufficient length to give a cutting insert appropriate support in axial direction as well as radial direction.

According to another embodiment of the invention, said at least one indexable first cutting insert has 360°/n rotational symmetry about the centre axis of the cutting insert, wherein n is an integer corresponding to the number of said indexing surfaces included in the peripheral surface of the cutting insert. In this context, the cutting insert is considered to have 360°/n rotational symmetry about the centre axis even if any of the rake face, the abutment face or the peripheral surface is provided with one or more minor markings, for instance in the form of minor indentations, that lack 360°/n rotational symmetry image about the centre axis, on condition that these one or more markings have no relevance for the functioning of the cutting insert.

According to another embodiment of the invention, said at least one indexable second cutting insert has 360°/m rotational symmetry about the centre axis of the cutting insert, wherein m is an integer corresponding to the number of said indexing recesses provided in the peripheral surface of the cutting insert. In this context, the cutting insert is considered to have 360°/m rotational symmetry about the centre axis even if any of the rake face, the abutment face or the peripheral surface is provided with one or more minor markings, for instance in the form of minor indentations, that lack 360°/m rotational symmetry image about the centre axis, on condition that these one or more markings have no relevance for the functioning of the cutting insert.

According to another embodiment of the invention, the bottom wall of said space in said at least one insert seat forms part of shim plate that is releasably fixed in the insert seat. However, the insert seat may as an alternative lack a separate shim plate, wherein the bottom wall of said space in the insert seat may be formed directly in the tool body or form part of a separate cassette that is releasably mounted to the tool body.

According to another embodiment of the invention, the bottom wall of said space in said at least one insert seat is planar and extends in an imaginary plane that intersects the protruding part of said at least one rotation-preventing member when the rotation-preventing member is mounted in the insert seat.

A cutting tool according to the present invention is particularly intended to be designed as a milling tool. In this case, the tool body preferably comprises two or more insert seats of the type described above distributed in the circumferential direction of the tool body. However, the cutting tool according to the present invention may as an alternative be designed as a turning tool.

Further advantageous features of the cutting tool according to the present invention will appear from the description following below.

### BRIEF DESCRIPTION OF THE DRAWINGS

With reference to the appended drawings, a specific description of embodiments of the invention cited as examples follows below. In the drawings:
- Fig 1: is a perspective view of a tool body and indexable first cutting inserts included in a cutting tool according to an embodiment of the present invention, as seen with one of the cutting inserts removed from the associated insert seat in the tool body,
- Fig 2: is a lateral view of the tool body of Fig 1 with indexable first cutting inserts mounted in the insert seats of the tool body,
- Fig 3: is a front view of the tool body of Fig 1 with indexable first cutting inserts mounted in the insert seats of the tool body,
- Fig 4: is a perspective view in larger scale of a part of the tool body of Fig 1, illustrating an insert seat formed in the tool body,
- Fig 5: is a lateral view of the insert seat of Fig 4,
- Fig 6: is a cut according to the line VI-VI in Fig 5,
- Fig 7: is a lateral view corresponding to Fig 5, with an indexable first cutting insert mounted in the insert seat,
- Fig 8: is a cut according to the line VIII-VIII in Fig 7,
- Fig 9a: is a cut according to the line IXa-IXa in Fig 8,
- Fig 9b: is a cut according to the line IXb-IXb in Fig 8,
- Fig 10: is a perspective view of the tool body of Fig 1 and indexable second cutting inserts, as seen with one of the cutting inserts removed from the associated insert seat in the tool body,
- Fig 11: is a perspective view from another direction of the tool body of Fig 10 with indexable second cutting inserts mounted in the insert seats of the tool body,
- Fig 12: is a cut according to the line XII-XII in Fig 11,
- Fig 13: is a perspective view corresponding to Fig 4, but with a rotation-preventing member mounted to the insert seat,
- Fig 14: is a lateral view of the insert seat of Fig 13, with an indexable second cutting insert mounted in the insert seat,
- Fig 15: is a cut according to the line XV-XV in Fig 14,
- Fig 16a: is a cut according to the line XVIa-XVIa in Fig 15,
- Fig 16b: is a cut according to the line XVIb-XVIb in Fig 15,
- Fig 17: is a perspective view of a rotation-preventing member,
- Figs 18a and 18b: are perspective views from different directions of a shim plate included in the tool body of Fig 1,
- Figs 19a and 19b: are perspective views from different directions of one of the indexable first cutting inserts,
- Fig 19c: is a plan view from above of the cutting insert of Figs 19a and 19b,
- Fig 19d: is a plan view from below of the cutting insert of Figs 19a and 19b,
- Fig 19e: is a lateral view of the cutting insert of Figs 19a and 19b,
- Fig 19f: is a cut according to the line XlXf-XlXf in Fig 19c,
- Figs 20a and 20b: are perspective views from different directions of one of the indexable second cutting inserts,
- Fig 20c: is a plan view from above of the cutting insert of Figs 20a and 20b,
- Fig 20d: is a plan view from below of the cutting insert of Figs 20a and 20b,
- Fig 20e: is a lateral view of the cutting insert of Figs 20a and 20b,
- Fig 20f: is a cut according to the line XXf-XXf in Fig 20c,
- Fig 21a: is a cut according to the line XXIa-XXIa in Fig 7,
- Fig 21b: is a cut according to the line XXIb-XXIb in Fig 14,
- Fig 22a: is a cross-section through the cutting insert of Figs 19a and 19b in level with the cut illustrated in Fig 21a,
- Fig 22b: is a cross-section through the cutting insert of Figs 20a and 20b in level with the cut illustrated in Fig 21b, and
- Fig 23: is a cut according to the line XXIII-XXIII in Fig 19e.

### DETAILED DESCRIPTION OF EMBODIMENTS OF THE INVENTION

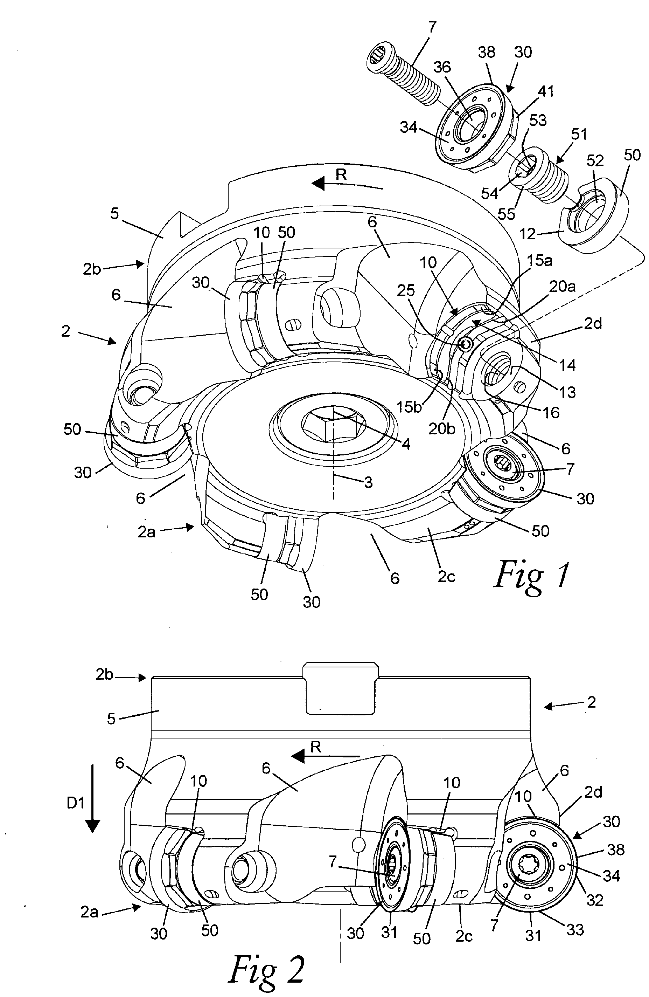

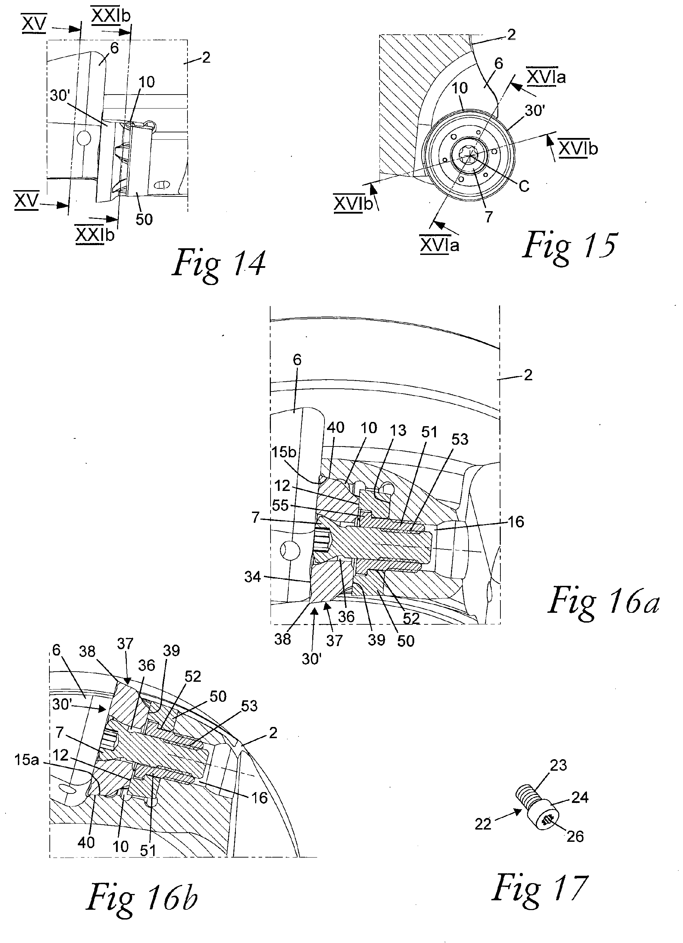

Components included in a cutting tool according to an embodiment of the present invention are illustrated in Figs 1-23. In the illustrated embodiment, the cutting tool has the design of a milling tool in the form of a face milling cutter. However, the cutting tool of the present invention may as an alternative have the design of any other suitable type of milling tool. The cutting tool of the present invention may also have the design of a turning tool.

The cutting tool comprises a tool body 2 and is, when designed as a milling tool, configured to be rotated about an axis of rotation 3. The tool body 2 has a front end 2a and an opposite rear end 2b. A longitudinal centre axis 4 of the tool body 2 extends between the rear end 2b and the front end 2a of the tool body, wherein this centre axis 4 coincides with the axis of rotation 3 of the cutting tool. A rear part of the tool body 2 forms a connection member 5, through which the tool body 2 is mountable, directly or via an intermediate tool holder, to a rotating spindle or the similar of a machine, for instance a milling machine. At the front end 2a, the tool body 2 is provided with an axially forwardly facing front face 2c. The tool body 2 also has a peripheral surface 2d that adjoins to the front face 2c and extends from the front face 2c towards the rear end 2b of the tool body.

In the illustrated embodiment, the tool body 2 is provided with several insert seats 10 which are evenly or at least substantially evenly distributed in the circumferential direction of the tool body 2 and configured to receive a respective cutting insert 30, 30'. Thus, the insert seats 10 and also the cutting inserts 30, 30', are evenly or at least substantially evenly distributed about the centre axis 4 of the tool body 2. Each cutting insert 30, 30' is configured to be detachably mounted in its associated insert seat 10. A chip pocket 6 is provided in the tool body, 2 in front of each insert seat 10 as seen in the intended direction of rotation R of the tool body 2.

The cutting inserts 30, 30' are made of hard and wear-resistant material, preferably cemented carbide, and the tool body 2 is preferably made of steel.

In the illustrated embodiment, the tool body 2 is provided with five insert seats 10 spaced apart in the circumferential direction of the tool body. However, the tool body 2 may as an alternative, inter alia depending on the diameter of the tool body, be provided with any other suitable number of insert seats 10. In the illustrated embodiment, each insert seat 10 is located at a transition between the front face 2c and the peripheral surface 2d of the tool body 2. Each insert seat 10 comprises a space 11 configured to accommodate a releasably mounted cutting insert 30, 30', wherein this space 11 is open towards the front face 2c of the tool body 2 in order to allow a cutting insert 30, 30' mounted in the insert seat 10 to project in the axial direction of the tool body 2 beyond the front end 2a thereof and also open towards the peripheral surface 2d of the tool body 2 in order to allow a cutting insert 30, 30' mounted in the insert seat 10 to project in the radial direction of the tool body 2 beyond the peripheral surface 2d thereof.

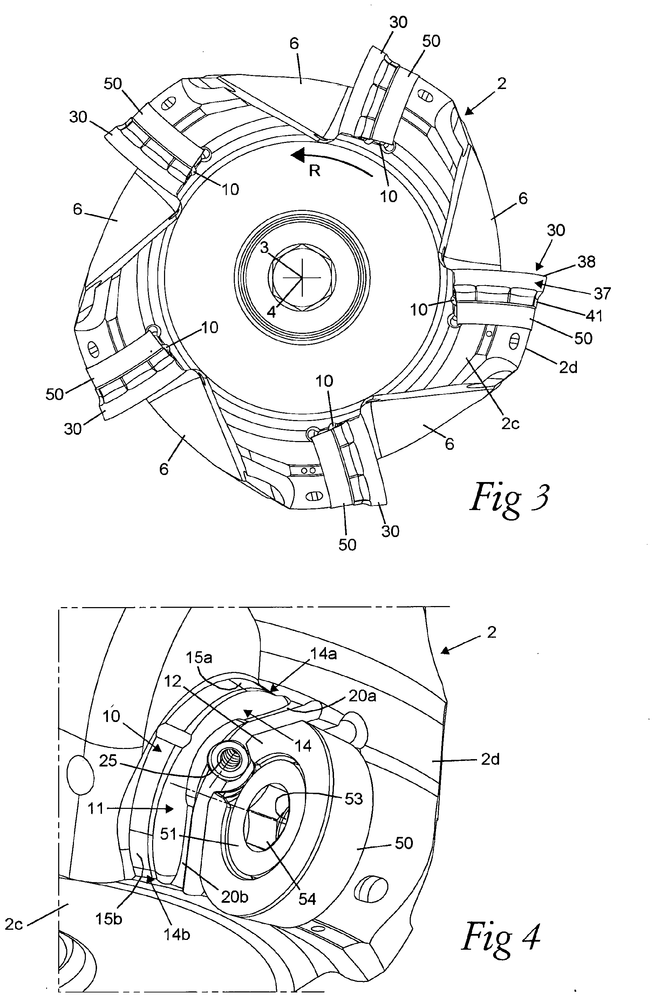

Each insert seat 10 comprises a substantially tangentially facing bottom wall 12, a substantially tangentially facing top opening opposite to the bottom wall 12 and an internal wall 14 provided between the bottom wall 12 and the top opening. The top opening is facing the chip pocket 6 provided in front of the insert seat 10. The bottom wall 12 is planar, or at least substantially planar, and is configured to abut against a tangential abutment surface 39 on a cutting insert 30, 30' when the cutting insert is mounted in the insert seat 10. The internal wall 14 extends transversely to the bottom wall 12 and delimits the cutting insert accommodating space 11 together with the bottom wall 12. The internal wall 14 has a first end 14a (see Fig 4), through which the internal wall 14 adjoins to the peripheral surface 2d of the tool body 2, and a second end 14b, through which the internal wall 14 adjoins to the front face 2c of the tool body 2. The insert seat 10 is configured to receive a cutting insert 30, 30' with a round basic shape, wherein the internal wall 14 extends in a curved path from its first end 14a to its second end 14b.

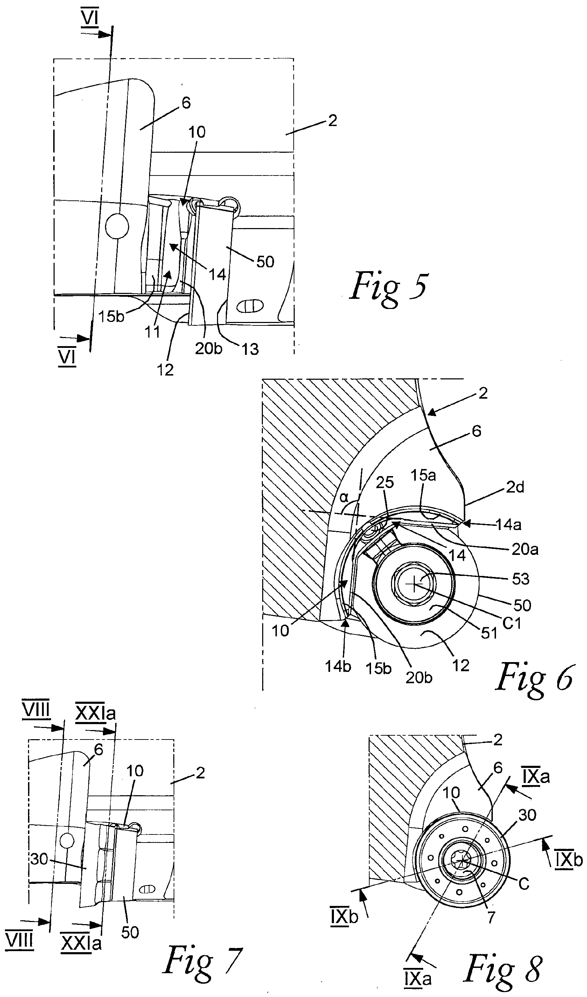

In the illustrated embodiment, a shim plate 50 is arranged between a tangential support surface 13 in the insert seat 10 and the cutting insert 30, 30' mounted in the insert seat. In this case, the bottom wall 12 of the cutting insert accommodating space 11 in the insert seat 10 forms part of the shim plate 50 and is constituted by a side face of the shim plate. The shim plate 50 is releasably fixed against the tangential support surface 13 by means of a tubular screw 51, which extends through a through hole 52 in the shim plate 50 and is engaged in a threaded hole 16 in the tangential support surface 13 in the insert seat. In the illustrated embodiment, each cutting insert 30, 30' is fixed to the associated insert seat 10 by means of a fastening element 7 in the form of a screw, which extends through a through hole 36 in the cutting insert 30, 30' and is engaged in a threaded hole 53 in the tubular screw 51 of the shim plate 50 that is mounted in the insert seat. A socket 54 designed for releasable engagement with a torque tool (not shown) is provided in a head 55 of the tubular screw 51 to allow a torque tool to be connected to the tubular screw 51 when it is to be rotated in order to secure the shim plat 50 to the insert seat 10 or in order to release the shim plat 50 from the insert seat 10. In a conventional manner, the centre axis of the through hole 36 in each cutting insert 30, 30' is slightly offset from a centre axis C1 (see Fig 6) of the threaded hole 53 in the tubular screw 51 of the shim plate 50 of the insert seat 10 when the cutting insert 30, 30' is mounted in the insert seat 10 in any of its working positions.

In a cutting tool of the type illustrated in Figs 1-23, each insert seat 10 is preferably so designed that a cutting insert 30, 30' is given an axial tipping-in angle in an interval from -8° to 5° and a radial tipping-in angle in an interval from -5° to 0° when mounted in the insert seat 10 in any of its working positions. In the illustrated embodiment, each insert seat 10 is so designed that a cutting insert 30, 30' is given a positive axial tipping-in angle and a negative radial tipping-in angle when mounted in the insert seat 10 in any of its working positions.

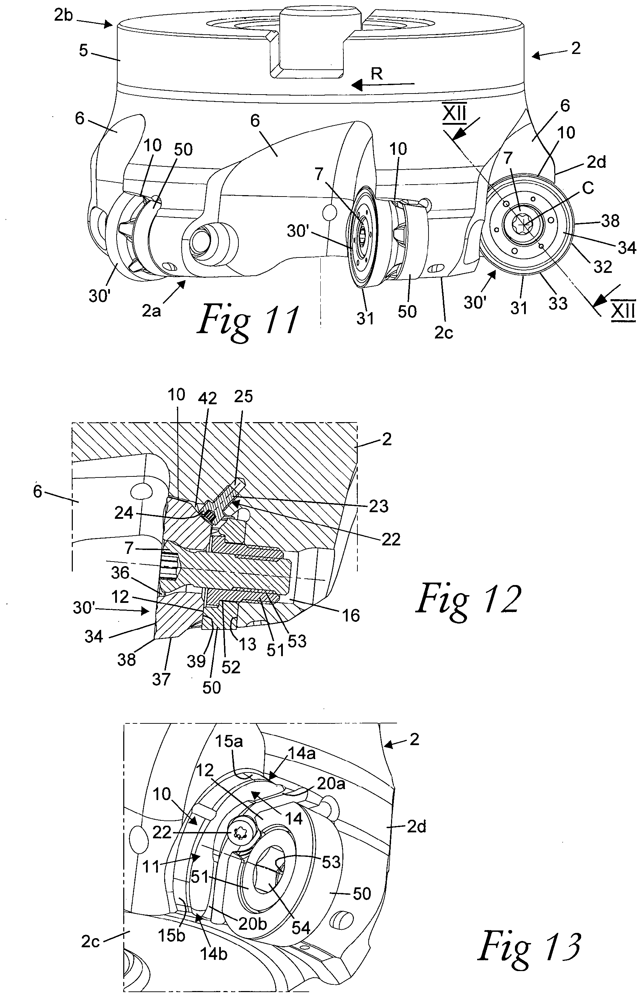

The insert seats 10 are arranged in level with each other as seen in the axial direction of the tool body 2, such that an axially foremost point 31 (see Figs 2 and 11) of each individual cutting insert 30, 30', as seen in a reference direction D1 from the rear end 2b of the tool body 2 towards the front end 2a of the tool body in parallel with the centre axis 4 of the tool body, is located in level with the axially foremost point 31 of each one of the other cutting inserts 30, 30', within manufacturing tolerances, when the cutting inserts 30, 30' are mounted in the insert seats 10.

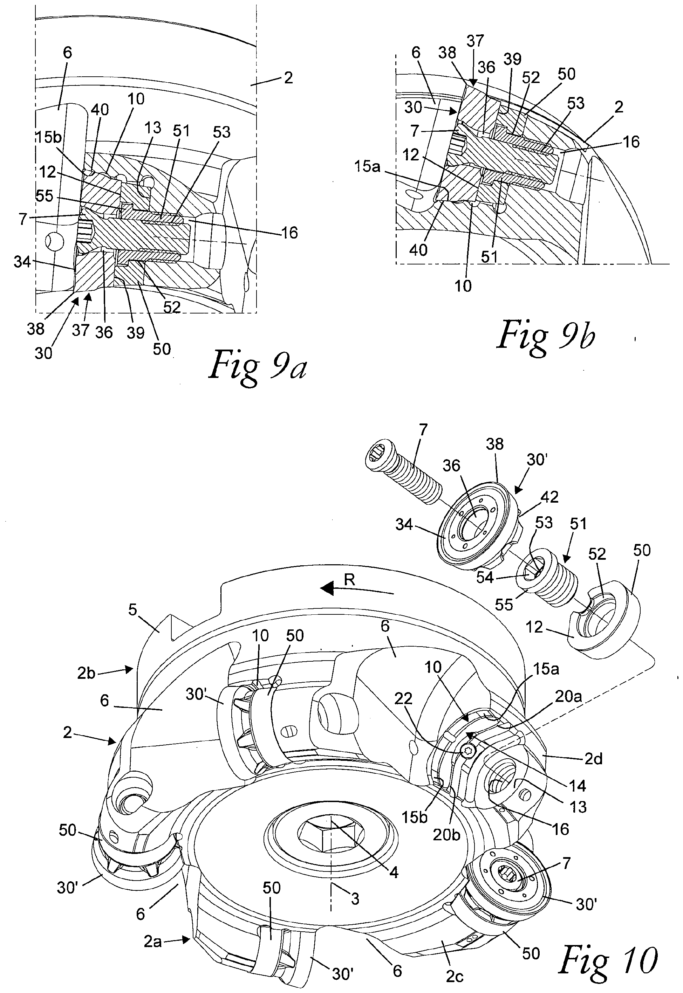

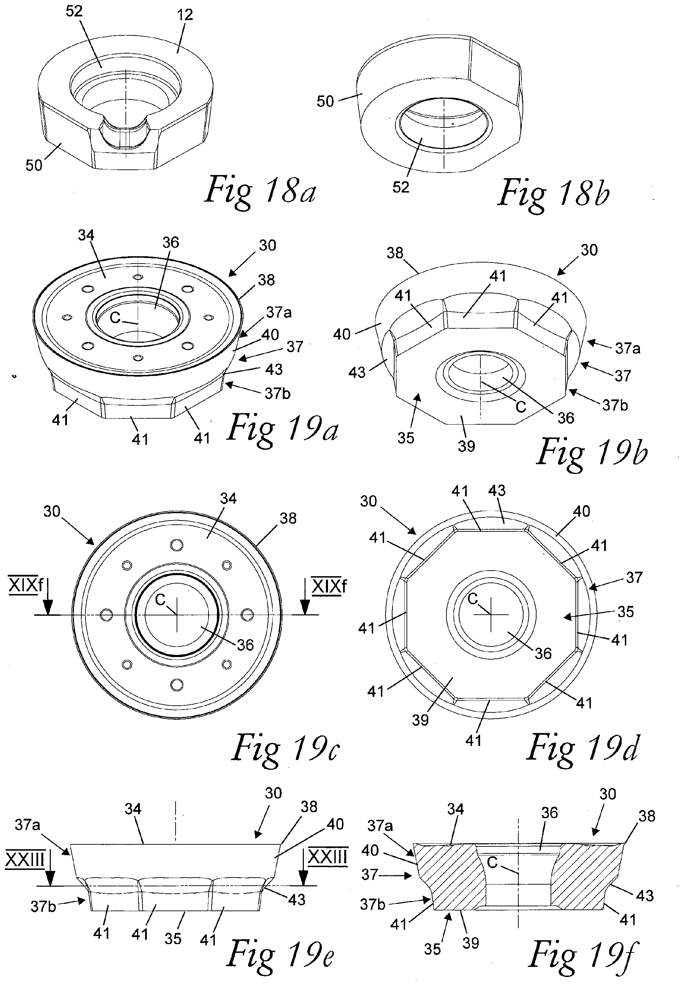

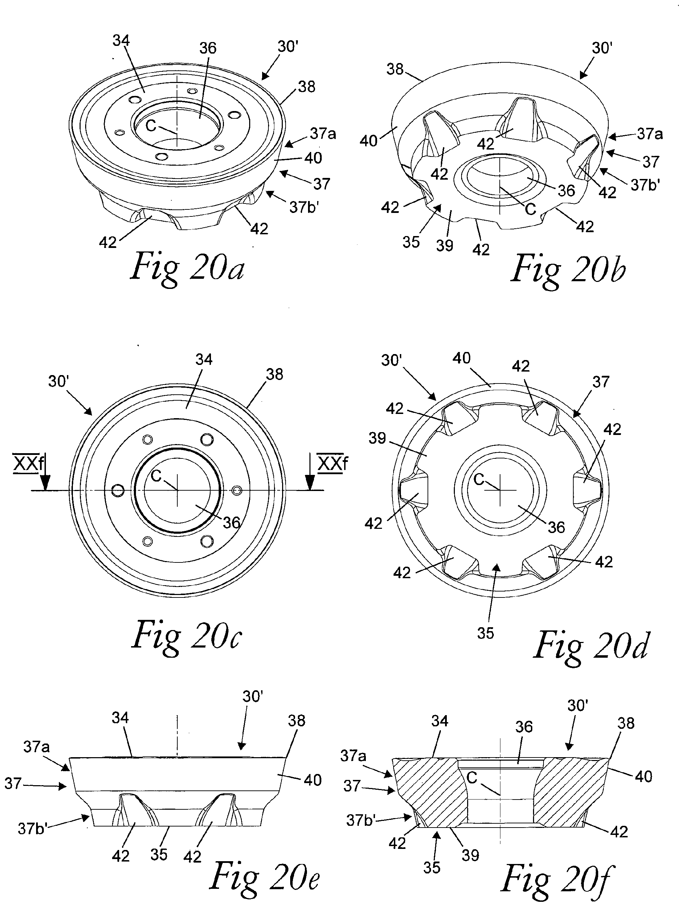

The cutting tool comprises cutting inserts 30 of a first type and cutting inserts 30' of a second type. The cutting inserts 30 of the first type are here referred to as indexable first cutting inserts, and the cutting inserts 30' of the second type are here referred to as indexable second cutting inserts. An indexable first cutting insert 30 and an indexable second cutting insert 30' are both mountable, one at a time, in each insert seat 10. The indexable first cutting inserts 30 are all geometrically identical to each other, within manufacturing tolerances. Thus, the indexable first cutting inserts 30 have the same shape. The indexable first cutting inserts 30 illustrated in Figs 1-3, 7 and 8 are of the design illustrated in closer detail in Figs 19a-19f. The indexable second cutting inserts 30' are all geometrically identical to each other, within manufacturing tolerances. Thus, the indexable second cutting inserts 30' have the same shape. The indexable second cutting inserts 30' illustrated in Figs 10, 11, 14 and 15 are of the design illustrated in closer detail in Figs 20a-20f.

Each one of the indexable first cutting inserts 30 and the indexable second cutting inserts 30' has a round basic shape and is rotatable into different working positions. Thus, the cutting insert 30, 30' may be mounted in different rotary positions, i.e. different indexing position, in the associated insert seat 10. The cutting insert 30, 30' comprises a rake face 34 and an abutment face 35 arranged on opposite sides of the cutting insert and serving as top and bottom faces of the cutting insert. When mounted in the associated insert seat 10, the cutting insert 30, 30' is configured to abut against the bottom wall 12 in the insert seat via a tangential abutment surface 39 on the abutment face 35. The cutting insert 30, 30' has a centre axis C, which extends between the rake face 34 and the abutment face 35. The cutting insert 30, 30' is provided with a through hole 36, which extends centrally through the cutting insert between the rake face 34 and the abutment face 35. The centre axis C of the cutting insert coincides with the centre axis of the through hole 36.

A peripheral surface 37, which constitutes the relief surface of the cutting insert 30, 30', extends around the cutting insert between the rake face 34 and the abutment face 35. When mounted in the associated insert seat 10, the cutting insert 30, 30' is configured to abut against one or more curved side support surfaces 15a, 15b on the internal wall 14 of the above-mentioned space 11 in the insert seat 10 through one or more parts of an annular side abutment surface 40, which extends around and is concentric with the centre axis C of the cutting insert 30, 30' and included in a first part 37a of the peripheral surface 37 that is adjacent to and adjoins to the rake face 34. In the illustrated embodiment, the annular side abutment surface 40 is conical, but it could as an alternative be cylindrical. A circular cutting edge 38 extends around the centre axis C of the cutting insert 30, 30' along the periphery of the rake face 34 and is formed at an intersection between the peripheral surface 37 and the rake face 34. The circular cutting edge 38 is concentric with the centre axis C of the cutting insert 30, 30'. In each one of the different working positions of the cutting insert 30, 30' in the associated insert seat 10, a radially outermost section 32 (see Figs 2 and 11) of the circular cutting edge 38 is configured to operate as a primary cutting edge of the cutting insert, and an axially foremost section 33 of the circular cutting edge 38, including the above-mentioned axially foremost point 31 of the cutting insert, is configured to operate as a secondary cutting edge of the cutting insert.

In the illustrated embodiment, said one or more side support surfaces 15a, 15b on the internal wall 14 of the cutting insert accommodating space 11 in each insert seat 10 are two in number and consist of a substantially axially facing first side support surface 15a located at the first end 14a of the internal wall close to the peripheral surface 2d of the tool body 2, and a substantially radially facing second side support surface 15b located at the second end 14b of the internal wall close to the front face 2c of the tool body 2. The first and second side support surfaces 15a, 15b are curved to conform to the curved shape of the annular side abutment surface 40 of the cutting inserts 30, 30'.

Preferably, the first part 37a of the peripheral surface 37 of each indexable first cutting insert 30 and the first part 37a of the peripheral surface 37 of each indexable second cutting insert 30' have such shape that, in each plane that is parallel to the bottom wall 12 of the cutting insert accommodating space 11 in an insert seat 10 and intersects said one or more side support surfaces 15a, 15b of the insert seat 10, the annular side abutment surface 40 of each indexable first cutting insert 30 has, when the cutting insert 30 is mounted in the insert seat 10 in any of its working positions, a diameter in the plane in question that is the same or at least substantially the same as the diameter in the plane in question of the annular side abutment surface 40 of each indexable second cutting insert 30', when mounted in the insert seat 10 in any of its working positions. In this context, the diameters in question are considered to be "substantially the same" if they are the same within manufacturing tolerances. These manufacturing tolerances are the same as the tolerances for the diameter of an of an inscribed circle of the cutting edge 38. When the cutting inserts 30, 30' are formed by direct pressing, this tolerance is ±0.1 mm.

In the illustrated embodiment, the annular side abutment surface 40 of each indexable first cutting insert 30 is geometrically identical, within manufacturing tolerances, to the annular side abutment surface 40 of each indexable second cutting insert 30'.

In the illustrated embodiment, each one of the indexable first cutting inserts 30 and the indexable second cutting inserts 30' is provided with a through hole 36 for receiving a fastening element 7 in the form of a screw to be used for securing the cutting insert 30, 30' in the associated insert seat 10. In this case, the through hole 36 in each indexable first cutting insert 30 is preferably geometrically identical, within manufacturing tolerances, to the through hole 36 in each indexable second cutting insert 30'. Furthermore, the fastening element 7 used for securing an indexable first cutting insert 30 in an insert seat 10 is preferably the same as, or identical to, the fastening element 7 used for securing an indexable second cutting insert 30' in the same insert seat 10.

Each insert seat 10 comprises one or more planar, or at least substantially planar, rotation-preventing surfaces 20a, 20b provided on the internal wall 14 and configured to co-operate with corresponding indexing surfaces 41 on one of the indexable first cutting inserts 30 when mounted in the insert seat 10 in any of its working positions. In the illustrated embodiment, a planar, or at least substantially planar, first rotation-preventing surface 20a and a planar, or at least substantially planar, second rotation-preventing surface 20b are provided at a distance from each other on the internal wall 14, wherein these first and second rotation-preventing surfaces 20a, 20b are non-coplanar with each other and preferably so arranged in relation to each other that, in any plane that is parallel to the bottom wall 12 of the cutting insert accommodating space 11 in the insert seat 10 and intersects the first and second rotation-preventing surfaces 20a, 20b, the first and second rotation-preventing surfaces 20a, 20b extend at an angle α (see Fig 6) of 90° to each other.

Several planar, or at least substantially planar, indexing surfaces 41 are included in the peripheral surface 37 of each indexable first cutting insert 30 and distributed about the centre axis C of the cutting insert. These indexing surfaces 41 are included in a second part 37b of the peripheral surface 37 that is located between the above-mentioned first part 37a of the peripheral surface 37 and the abutment face 35. Thus, each indexing surface 41 is located on the peripheral surface 37 of the cutting insert 30 between the annular side abutment surface 40 and the abutment face 35. In the illustrated embodiment, each one of the indexing surfaces 41 adjoins to the abutment face 35 of the cutting insert 30 along a lower edge of the indexing surface.

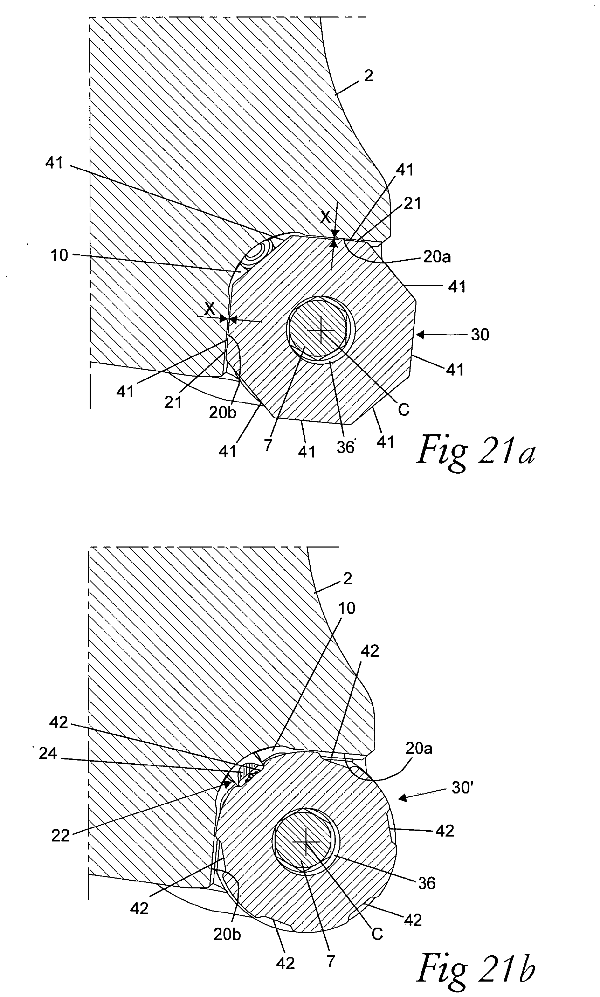

When one of the indexable first cutting inserts 30 is mounted in any of the insert seats 10 in any of its working positions, it is configured to be positioned with one of its indexing surfaces 41 in front of and facing the above-mentioned first rotation-preventing surface 20a of the insert seat 10 and with another one of its indexing surfaces 41 in front of and facing the above-mentioned second rotation-preventing surface 20b of the insert seat 10, as illustrated in Fig 21a. The second part 37b of the peripheral surface of each indexable first cutting insert 30 and the rotation-preventing surfaces 20a, 20b of each insert seat 10 are so adapted to each other that there is a small gap 21 (see Fig 21a), preferably in the order of 0.02 mm, between each rotation-preventing surface 20a, 20b and the indexing surface 41 facing the rotation-preventing surface 20a, 20b when the cutting insert 30 is in a mounting position in the cutting insert accommodating space 11 in the insert seat 10 with the indexing surface 41 facing the first rotation-preventing surface 20a located substantially in parallel with this first rotation-preventing surface 20a and with the indexing surface 41 facing the second rotation-preventing surface 20b located substantially in parallel with this second rotation-preventing surface 20b. The indexing surface 41 facing the first rotation-preventing surface 20a and the other indexing surface 41 facing the second rotation-preventing surface 20b are both configured to come into stopping contact with the associated rotation-preventing surface 20a, 20b when the cutting insert 30 is subjected to a rotation in the cutting insert accommodating space 11 from said mounting position in any direction about its centre axis C such that the cutting insert 30 is prevented from rotating in the cutting insert accommodating space 11 out of its prevailing working position by this stopping contact. Thus, the indexing surfaces 41 of each indexable first cutting insert 30 and the rotation-preventing surfaces 20a, 20b of the associated insert seat 10 jointly define the different working positions of the indexable first cutting insert 30 in the associated insert seat 10 and jointly prevent the cutting insert 30 from rotating in the associated insert seat 10 out of its prevailing working position.

In addition to the above-mentioned rotation-preventing surfaces 20a, 20b in the insert seats 10, the cutting tool also comprises rotation-preventing members 22 that are releasably mountable in the insert seats 10. In the illustrated embodiment, one single rotation-preventing member 22 is mountable in each individual insert seat 10. Thus, in this case, the number of rotation-preventing members 22 corresponds to the number of insert seats 10. Each rotation-preventing member 22 comprises an externally threaded shaft 23 and a protruding part 24 fixed to the shaft 23, wherein the shaft 23 is configured for threaded engagement with an internally threaded hole 25 provided in each insert seat 10. When the rotation-preventing member 22 is mounted to an insert seat 10 with the shaft 23 of the rotation-preventing member 22 in threaded engagement with the internally threaded hole 25 in the insert seat 10, the protruding part 24 of the rotation-preventing member 22 is configured to extend into the cutting insert accommodating space 11 in the insert seat 10, as illustrated in Figs 12 and 13. In the illustrated embodiment, the bottom wall 12 of the cutting insert accommodating space 11 in the insert seat 10 has its extension in an imaginary plane that intersects the protruding part 24 of the rotation-preventing member 22 when the rotation-preventing member 22 is mounted in the insert seat 10.

The protruding part 24 of the rotation-preventing member 22 is provided with a socket 26 designed for releasable engagement with a torque tool (not shown) to be used for rotating the rotation-preventing member 22 when it is to be mounted to or released from the internally threaded hole 25 in the insert seat 10. In the illustrated embodiment, the protruding part 24 of the rotation-preventing member 22 is formed as a head on the shaft 23, wherein the rotation-preventing member 22 has the shape of a screw with a cylindrical head.

Several indexing recesses 42 with a shape adapted to the shape of the protruding part 24 of the rotation-preventing member 22 are formed in the peripheral surface 37 of each indexable second cutting insert 30' and distributed about the centre axis C of the cutting insert 30'. These indexing recesses 42 are provided in a second part 37b' of the peripheral surface 37 that is located between the above-mentioned first part 37a of the peripheral surface 37 and the abutment face 35. Thus, each indexing recess 42 is located on the peripheral surface 37 of the cutting insert 30' between the annular side abutment surface 40 and the abutment face 35. In the illustrated embodiment, each one of the indexing recesses 42 opens into the abutment face 35 of the cutting insert 30'. Said indexing recesses 42 are configured to receive the protruding part 24 of the rotation-preventing member 22 of the associated insert seat 10 in a respective one of the different working positions of the cutting insert 30' when the cutting insert is mounted in the insert seat 10. By its engagement in one of the indexing recesses 42 in the peripheral surface 37 of the cutting insert 30', the rotation-preventing member 22 will prevent the cutting insert 30' from rotating in the insert seat 10 out of its prevailing working position.

When the indexable second cutting inserts 30' are to be mounted in the insert seats 10 of the tool body 2, the rotation-preventing members 22 are first mounted to a respective one of the insert seats 10. When one of the indexable second cutting inserts 30' is mounted in any of the insert seats 10 in any of its working positions, it is configured to be positioned with one of its indexing recesses 42 in front of and facing the protruding part 24 of the rotation-preventing member 22 in the insert seat 10. The protruding part 24 of the rotation-preventing member 22 is configured to extend into the indexing recess 42 facing the protruding part 24 and is configured to come into stopping contact with an internal surface of this indexing recess 42 when the cutting insert 30' is subjected to a rotation in the cutting insert accommodating space 11 in the insert seat 10 in any direction about its centre axis C such that the cutting insert 30' is prevented from rotating in the cutting insert accommodating space 11 out of its prevailing working position by this stopping contact. Thus, the indexing recesses 42 of each indexable second cutting insert 30' and the rotation-preventing member 22 in the associated insert seat 10 jointly define the different working positions of the indexable second cutting insert 30' in the associated insert seat 10 and jointly prevent the cutting insert 30' from rotating in the associated insert seat 10 out of its prevailing working position. The rotation-preventing members 22 and the indexing recesses 42 are preferably so adapted to each other that the protruding part 24 of each rotation-preventing member 22 is received with a small play in an indexing recess 42 of one of the indexable second cutting inserts 30' when the rotation-preventing member 22 is mounted to an insert seat 10 and the cutting insert 30' is mounted to the insert seat 10 in any of its working positions. The rotation-preventing members 22 are removable from the insert seats 10 to thereby allow the indexable first cutting inserts 30 to be mounted in a respective one of the insert seats 10 without being obstructed by the rotation-preventing members 22. Thus, when the indexable first cutting inserts 30 are to be mounted in the insert seats 10 of the tool body 2, the rotation-preventing members 22 are first removed from the insert seats 10.

The indexing surfaces 41 included in the peripheral surface 37 of each one of the indexable first cutting inserts 30 are preferably 4-10 in number, more preferably 4-8 in number, and are preferably equally distributed about the centre axis C of the cutting insert 30, i.e. spaced at equal angular intervals around the circumference of the peripheral surface 37 of the cutting insert 30. When each insert seat 10 is provided with two rotation-preventing surfaces 20a, 20b that extend at an angle α of 90° to each other, the indexing surfaces 41 included in the peripheral surface 37 of each one of the indexable first cutting inserts 30 are preferably 4 or 8 in number. In the illustrated embodiment, each indexable first cutting insert 30 is provided with eight indexing surfaces 41 equally distributed about the centre axis C of the cutting insert 30. Furthermore, in the illustrated embodiment, the second part 37b of the peripheral surface 37 of each one of the indexable first cutting inserts 30 has a substantially regular polygon shape, as seen in any cross-sectional plane that is perpendicular to the centre axis C of the cutting insert 30 and intersects the indexing surfaces 41, with main sides formed by a respective one of the indexing surfaces 41 and with chamfered or rounded corners between the main sides.

The number of the indexing recesses 42 provided in the peripheral surface 37 of each one of the indexable second cutting inserts 30' is preferably the same as or lower than the number of the indexing surfaces 41 included in the peripheral surface 37 of each one of the indexable first cutting inserts 30. The indexing recesses 42 are preferably equally distributed about the centre axis C of the cutting insert 30', i.e. spaced at equal angular intervals around the circumference of the peripheral surface 37 of the cutting insert 30'. In the illustrated embodiment, each indexable second cutting insert 30' is provided with six indexing recesses 42 equally distributed about the centre axis C of the cutting insert 30'.

Each one of the indexable first cutting inserts 30 preferably has 360°/n rotational symmetry about the centre axis C of the cutting insert, wherein n is an integer corresponding to the number of said indexing surfaces 41 included in the peripheral surface 37 of the cutting insert 30. In the illustrated embodiment with eight indexing surfaces 41, each indexable first cutting insert 30 has 45° rotational symmetry about the centre axis C. This rotational symmetry of the cutting insert 30 about the centre axis C implies that the indexing surfaces 41 are identical to each other, within manufacturing tolerances.

In the corresponding manner, each one of the indexable second cutting inserts 30' preferably has 360°/m rotational symmetry about the centre axis C of the cutting insert, wherein m is an integer corresponding to the number of said indexing recesses 42 included in the peripheral surface 37 of the cutting insert 30'. In the illustrated embodiment with six indexing recesses 42, each indexable second cutting insert 30' has 60° rotational symmetry about the centre axis C. This rotational symmetry of the cutting insert 30' about the centre axis C implies that the indexing recesses 42 are identical to each other, within manufacturing tolerances.

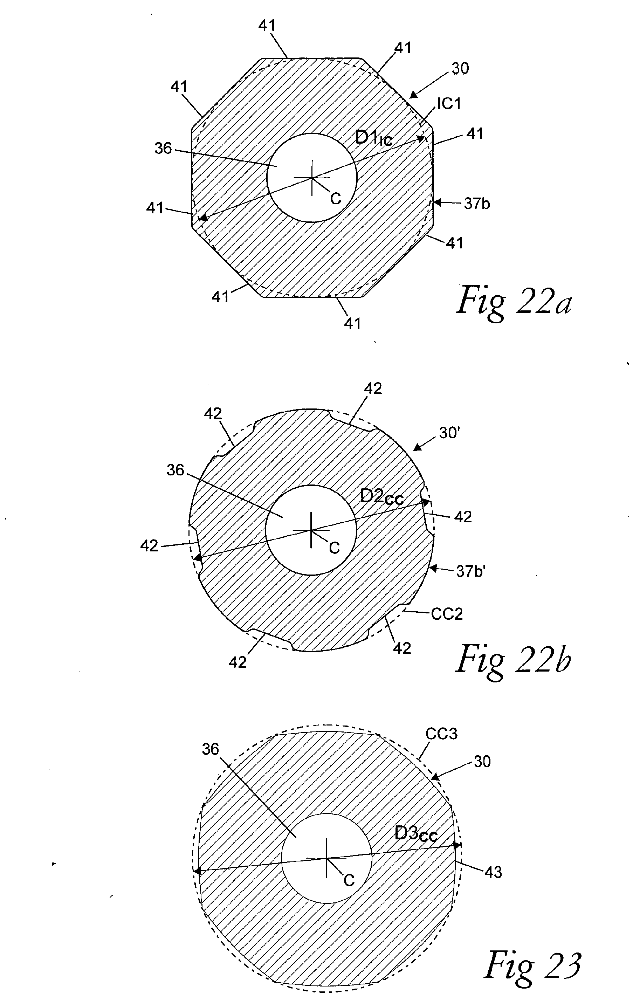

In order to prevent the rotation-preventing surfaces 20a, 20b of an insert seat 10 from obstructing the rotation-preventing effect of the rotation-preventing member 22 when an indexable second cutting insert 30' is mounted in the insert seat 10 in any of its working positions, the second part 37b' of the peripheral surface 37 of each one of the indexable second cutting inserts 30' has such shape that there is no rotation-obstructing contact between the peripheral surface 37 of an indexable second cutting insert 30' and any of the rotation-preventing surfaces 20a, 20b of an insert seat 10 when the indexable second cutting insert 30' is mounted in the insert seat 10 in any of its working positions. This may for instance be achieved by giving the second part 37b' of the peripheral surface 37 of each one of the indexable second cutting inserts 30' such shape that, in each plane that is parallel to the bottom wall 12 of the cutting insert accommodating space 11 in an insert seat 10 and intersects the first and second rotation-preventing surfaces 20a, 20b of the insert seat 10, the following condition is fulfilled: 0.8D1_{IC}≤D2_{CC}≤D1_{IC}+2X, preferably 0.9D1_{IC}≤D2_{CC}≤D1_{IC}+2X, more preferably D1_{IC}≤D2_{CC}≤D1_{IC}+2X, where:
- D2_{CC} is the diameter of a circumscribed circle CC2 (see Fig 22b) of a cross-section of the second part 37b' of the peripheral surface 37 of the indexable second cutting insert 30', as seen in the plane in question when the indexable second cutting insert 30' is mounted in the insert seat 10 in any of its working positions,
- D1_{IC} is the diameter of an inscribed circle IC1 (see Fig 22a) of a cross-section of the second part 37b of the peripheral surface 37 of the indexable first cutting insert 30, as seen in the plane in question when the indexable first cutting insert 30 is mounted in the insert seat 10 in any of its working positions, and
- X is the perpendicular distance (see Fig 21a) between one of the rotation-preventing surfaces 20a, 20b of the insert seat 10 and the indexing surface 41 of the indexable first cutting insert 30 facing this rotation-preventing surface 20a, 20b, when the indexable first cutting insert 30 is in a mounting position in the cutting insert accommodating space 11 in the insert seat 10 with said indexing surface 41 substantially in parallel with the rotation-preventing surface 20a, 20b.

A cross-section through an insert seat 10 and an indexable first cutting insert 30 in a plane that is parallel to the bottom wall 12 of the cutting insert accommodating space 11 in the insert seat 10 and intersects the first and second rotation-preventing surfaces 20a, 20b of the insert seat 10 is illustrated in Fig 21a, and a cross-section through the insert seat 10 and an indexable second cutting insert 30' in the same plane is illustrated in Fig 21b.

When the second part 37b' of the peripheral surface 37 of each one of the indexable second cutting inserts 30' has such shape that the above-mentioned condition is fulfilled, each rotation-preventing surface 20a, 20b of the insert seat 10 may be formed as a continuous surface without causing any contact between the peripheral surface 37 of an indexable second cutting insert 30' and any of the rotation-preventing surfaces 20a, 20b of an insert seat 10 when the indexable second cutting insert 30' is mounted in the insert seat 10 in any of its working positions, which facilitates the manufacturing of the insert seat. However, each rotation-preventing surface 20a, 20b of the insert seat 10 may as an alternative comprise two co-planar rotation-preventing sub-surfaces separated from each other by an intermediate groove or recess that is configured to receive a small portion of the second part 37b' of the peripheral surface 37 of the indexable second cutting insert 30' when mounted in the insert seat 10 in any of its working positions. In the latter case, the second part 37b' of the peripheral surface 37 of each one of the indexable second cutting inserts 30' may be given such shape that D2_{CC} is somewhat larger than D1_{IC}+2X.

In the illustrated embodiment, each one of the rotation-preventing members 22 is, when mounted in any of the insert seats 10, located between the first and second rotation-preventing surfaces 20a, 20b of the insert seat 10, as seen in a direction in the cutting insert accommodating space 11 in the insert seat corresponding to a circumferential direction of the peripheral surface 37 of one of the indexable second cutting inserts 30' when mounted in the insert seat 10 in any of its working positions. Furthermore, in the illustrated embodiment, each one of the rotation-preventing members 22 is, when mounted in any of the insert seats 10, located radially inwardly of the first rotation-preventing surface 20a of the insert seat 10 and axially rearwardly of the second rotation-preventing surface 20b of the insert seat 10.

In the illustrated embodiment, each one of the indexing surfaces 41 included in the peripheral surface 37 of each one of the indexable first cutting inserts 30 adjoins to the annular side abutment surface 40 of the cutting insert via an annular transition surface 43 included in the peripheral surface 37 of the cutting insert 30. This transition surface 43 extends around and is concentric with the centre axis C of the cutting insert 30. As seen in any cross-sectional plane that is perpendicular to the centre axis C of the cutting insert 30 and intersects the transition surface 43, the transition surface 43 has a circumscribed circle CC3 (see Fig 23), whose diameter D3_{cc} increases with increasing distance of the cross-sectional plane from the abutment face 35 of the cutting insert 30.

In the illustrated embodiment, the annular side abutment surface 40 of each one of the indexable first cutting inserts 30 is conical and forms part of an imaginary cone, wherein said second part 37b of the peripheral surface 37 of the cutting insert 30 and said transition surface 43 are entirely located inside this imaginary cone and are spaced at a distance from the lateral surface of this imaginary cone.

In the illustrated embodiment, the annular side abutment surface 40 of each one of the indexable second cutting inserts 30' is conical and forms part of an imaginary cone, wherein said second part 37b' of the peripheral surface 37 of the cutting insert 30' is in its entirety located inside this imaginary cone and is spaced at a distance from the lateral surface of this imaginary cone.

The insert seats 10 may, as illustrated in the drawings, be formed directly in the tool body 2. However, each insert seat may as an alternative be formed in a separate cassette, which in its turn is releasably mounted to the tool body.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A cutting tool comprising:
- a tool body (2);
- at least one insert seat (10) provided in the tool body (2) and comprising a space (11) configured to accommodate an indexable cutting insert (30, 30'), this space (11) being delimited by a tangentially facing bottom wall (12) and an internal wall (14) that extends transversely to the bottom wall (12), wherein at least one planar, or at least substantially planar, rotation-preventing surface (20a, 20b) is provided on this internal wall (14); and
- at least one indexable first cutting insert (30) and at least one indexable second cutting insert (30') releasably mountable, one at a time, in said at least one insert seat (10), wherein each cutting insert (30, 30') of said at least one indexable first cutting insert (30) and said at least one indexable second cutting insert (30') is mountable in different working positions in said at least one insert seat (10) and comprises:
• a rake face (34) and an abutment face (35) arranged on opposite sides of the cutting insert (30, 30'), the cutting insert (30, 30') having a centre axis (C) that extends between the rake face (34) and the abutment face (35), wherein the cutting insert (30, 30'), when mounted in said at least one insert seat (10) in any of its working positions, is configured to abut against the bottom wall (12) of said space (11) in the insert seat (10) through the abutment face (35),
• a peripheral surface (37) extending around the cutting insert (30, 30') between the rake face (34) and the abutment face (35),
• a circular cutting edge (38) formed at an intersection between the peripheral surface (37) and the rake face (34) and extending around the centre axis (C) of the cutting insert (30, 30') along a periphery of the rake face (34), and
• a conical or cylindrical side abutment surface (40) included in the peripheral surface (37) and extending around the centre axis (C) of the cutting insert (30, 30'), wherein this conical or cylindrical side abutment surface (40) is concentric with the centre axis (C) of the cutting insert (30, 30') and included in a first part (37a) of the peripheral surface (37) that is adjacent to and adjoins to the rake face (34), and wherein the cutting insert (30, 30'), when mounted in said at least one insert seat (10) in any of its working positions, is configured to abut against one or more side support surfaces (15a, 15b) on the internal wall (14) of said space (11) in the insert seat (10) through the conical or cylindrical side abutment surface (40),
wherein several planar, or at least substantially planar, indexing surfaces (41) are included in the peripheral surface (37) of said at least one indexable first cutting insert (30) and distributed about the centre axis (C) of the cutting insert (30), these indexing surfaces (41) being included in a second part (37b) of the peripheral surface (37) that is located between said first part (37a) of the peripheral surface (37) and the abutment face (35), and
wherein said at least one indexable first cutting insert (30), when mounted in said at least one insert seat (10) in any of its working positions, is configured to be positioned with one of said indexing surfaces (41) in front of and facing said at least one rotation-preventing surface (20a, 20b) on the internal wall (14) of said space (11) in the insert seat (10), the indexing surface (41) facing said at least one rotation-preventing surface (20a, 20b) being configured to be out of contact with the rotation-preventing surface (20a, 20b) when said at least one indexable first cutting insert (30) is in a mounting position in said space (11) with the indexing surface (41) substantially in parallel with the rotation-preventing surface (20a, 20b) and being configured to come into stopping contact with the rotation-preventing surface (20a, 20b) when the cutting insert (30) is subjected to a rotation in said space (11) from said mounting position in any direction about its centre axis (C) such that said at least one indexable first cutting insert (30) is prevented from rotating in said space (11) out of its prevailing working position by this stopping contact,
**characterized in:**
- **that** several indexing recesses (42) are provided in the peripheral surface (37) of said at least one indexable second cutting insert (30') and distributed about the centre axis (C) of the cutting insert (30'), these indexing recesses (42) being provided in a second part (37b') of the peripheral surface (37) that is located between said first part (37a) of the peripheral surface (37) and the abutment face (35);
- **that** the cutting tool, in addition to said at least one rotation-preventing surface (20a, 20b), comprises at least one rotation-preventing member (22) releasably mountable in said at least one insert seat (10), wherein the at least one rotation-preventing member (22) comprises an externally threaded shaft (23) and a protruding part (24) fixed to the shaft (23), wherein the shaft (23) is configured for threaded engagement with an internally threaded hole (25) provided in said at least one insert seat (10), and wherein the protruding part (24) is configured to extend into said space (11) in the insert seat (10) when the rotation-preventing member (22) is mounted to the insert seat (10) with the shaft (23) in threaded engagement with said internally threaded hole (25) in the insert seat (10); and
- **that** said at least one indexable second cutting insert (30'), when mounted in said at least one insert seat (10) in any of its working positions, is configured to be positioned with one of said indexing recesses (42) in front of and facing the protruding part (24) of said at least one rotation-preventing member (22), the protruding part (24) of said at least one rotation-preventing member (22) being configured to extend into the indexing recess (42) facing the protruding part (24) and being configured to come into stopping contact with an internal surface of this indexing recess (42) when the cutting insert (30') is subjected to a rotation in said space (11) in any direction about its centre axis (C) such that said at least one indexable second cutting insert (30') is prevented from rotating in said space (11) out of its prevailing working position by this stopping contact; and
- **that** said at least one rotation-preventing member (22) is removable from said at least one insert seat (10) to thereby allow said at least one indexable first cutting insert (30) to be mounted in the insert seat (10) without being obstructed by this rotation-preventing member (22).

2. A cutting tool according to claim 1, **characterized in that** the second part (37b') of the peripheral surface (37) of said at least one indexable second cutting insert (30') has such shape that, in each plane that is parallel to the bottom wall (12) of said space (11) in said at least one insert seat (10) and intersects said at least one rotation-preventing surface (20a, 20b) of the insert seat (10), the following condition is fulfilled: 0.8D1_{IC}≤D2_{CC}≤D1_{IC}+2X, preferably 0.9D1_{IC}≤D2_{CC}≤D1_{IC}+2X, more preferably D1_{IC}≤D2_{CC}≤D1_{IC}+2X, where:
- D2_{CC} is the diameter of a circumscribed circle of a cross-section of the second part (37b') of the peripheral surface (37) of said at least one indexable second cutting insert (30'), as seen in the plane in question when said at least one indexable second cutting insert (30') is mounted in said at least one insert seat (10) in any of its working positions,
- D1_{IC} is the diameter of an inscribed circle of a cross-section of the second part (37b) of the peripheral surface (37) of said at least one indexable first cutting insert (30), as seen in the plane in question when said at least one indexable first cutting insert (30) is mounted in said at least one insert seat (10) in any of its working positions, and
- X is the perpendicular distance between said at least one rotation-preventing surface (20a, 20b) of said at least one insert seat (10) and the indexing surface (41) of said at least one indexable first cutting insert (30) facing this rotation-preventing surface (20a, 20b), when said at least one indexable first cutting insert (30) is in a mounting position in said space (11) in the insert seat (10) with the indexing surface (41) substantially in parallel with the rotation-preventing surface (20a, 20b).

3. A cutting tool according to claim 1 or 2, **characterized in that** each one of the indexing surfaces (41) included in the peripheral surface (37) of said at least one indexable first cutting insert (30) adjoins to the abutment face (35) of the cutting insert along a lower edge of the indexing surface.

4. A cutting tool according to any of claims 1-3, **characterized in that** each one of the indexing surfaces (41) included in the peripheral surface (37) of said at least one indexable first cutting insert (30) adjoins to the conical or cylindrical side abutment surface (40) of the cutting insert via an annular transition surface (43) included in the peripheral surface (37) of the cutting insert (30), wherein this transition surface (43) extends around and is concentric with the centre axis (C) of the cutting insert (30), and wherein this transition surface (43), as seen in any cross-sectional plane that is perpendicular to the centre axis (C) of the cutting insert (30) and intersects the transition surface (43), has a circumscribed circle (CC3), the diameter (D3_{CC}) of which increasing with increasing distance of the cross-sectional plane from the abutment face (35) of the cutting insert (30).

5. A cutting tool according to any of claims 1-4, **characterized in that** said side abutment surface (40) of said at least one indexable first cutting insert (30) is conical and forms part of an imaginary cone, wherein said second part (37b) of the peripheral surface (37) of the cutting insert (30) is in its entirety located inside this imaginary cone and is spaced at a distance from the lateral surface of this imaginary cone.

6. A cutting tool according to any of claims 1-5, **characterized in that** said side abutment surface (40) of said at least one indexable second cutting insert (30') is conical and forms part of an imaginary cone, wherein said second part (37b') of the peripheral surface (37) of the cutting insert (30') is in its entirety located inside this imaginary cone and is spaced at a distance from the lateral surface of this imaginary cone.

7. A cutting tool according to any of claims 1-6, **characterized in that** the indexing surfaces (41) included in the peripheral surface (37) of said at least one indexable first cutting insert (30) are 4-10 in number, preferably 4-8 in number, and equally distributed about the centre axis (C) of the cutting insert (30).

8. A cutting tool according to any of claims 1-7, **characterized in that** the number of the indexing recesses (42) provided in the peripheral surface (37) of said at least one indexable second cutting insert (30') is the same as or lower than the number of the indexing surfaces (41) included in the peripheral surface (37) of said at least one indexable first cutting insert (30).

9. A cutting tool according to any of claims 1-8, **characterized in that** the indexing recesses (42) provided in the peripheral surface (37) of said at least one indexable second cutting insert (30') are equally distributed about the centre axis (C) of the cutting insert (30').

10. A cutting tool according to any of claims 1-9, **characterized in:**
- **that** a planar, or at least substantially planar, first rotation-preventing surface (20a) and a planar, or at least substantially planar, second rotation-preventing surface (20b) are provided at a distance from each other on the internal wall (14) of said space (11) in said at least one insert seat (10), wherein said first and second rotation-preventing surfaces (20a, 20b) are non-coplanar with each other; and
- **that** said at least one indexable first cutting insert (30), when mounted in said at least one insert seat (10) in any of its working positions, is configured to be positioned with one of said indexing surfaces (41) in front of and facing said first rotation-preventing surface (20a) on the internal wall (14) of said space (11) in the insert seat (10) and another one of said indexing surfaces (41) in front of and facing said second rotation-preventing surface (20b) on the internal wall (14) of said space (11) in the insert seat (10), the indexing surface (41) facing said first rotation-preventing surface (20a) and the other indexing surface (41) facing said second rotation-preventing surface (20b) both being configured to be out of contact with the associated rotation-preventing surface (20a, 20b) when said at least one indexable first cutting insert (30) is in a mounting position in said space (11) with the indexing surface (41) substantially in parallel with the associated rotation-preventing surface (20a, 20b) and being configured to come into stopping contact with the associated rotation-preventing surface (20a, 20b) when the cutting insert (30) is subjected to a rotation in said space (11) from said mounting position in any direction about its centre axis (C) such that said at least one indexable first cutting insert (30) is prevented from rotating in said space (11) out of its prevailing working position by this stopping contact.

11. A cutting tool according to claim 10, **characterized in that** the first and second rotation-preventing surfaces (20a, 20b) of said at least one insert seat (10) are so arranged in relation to each other that, in any plane that is parallel to the bottom wall (12) of said space (11) in the insert seat (10) and intersects the first and second rotation-preventing surfaces (20a, 20b), the first and second rotation-preventing surfaces (20a, 20b) extend at an angle (α) of 90° to each other.

12. A cutting tool according to claim 11, **characterized in that** the indexing surfaces (41) included in the peripheral surface (37) of said at least one indexable first cutting insert (30) are 4 or 8 in number and equally distributed about the centre axis (C) of the cutting insert (30).

13. A cutting tool according to any of claims 10-12, **characterized in that** said at least one rotation-preventing member (22), when mounted in said at least one insert seat (10), is located between the first and second rotation-preventing surfaces (20a, 20b) of the insert seat (10), as seen in a direction in said space (11) in the insert seat (10) corresponding to a circumferential direction of the peripheral surface (37) of said at least one second cutting insert (30') when mounted in the insert seat (10) in any of its working positions.

14. A cutting tool according to any of claims 1-13, **characterized in that** the second part (37b) of the peripheral surface (37) of said at least one indexable first cutting insert (30), as seen in any cross-sectional plane that is perpendicular to the centre axis (C) of the cutting insert (30) and intersects said indexing surfaces (41), has a substantially regular polygon shape with main sides formed by a respective one of the indexing surfaces (41) and with chamfered or rounded corners between the main sides.

15. A cutting tool according to any of claims 1-14, **characterized in that** each one of the indexing recesses (42) provided in the peripheral surface (37) of said at least one indexable second cutting insert (30') opens into the abutment face (35) of the cutting insert.

16. A cutting tool according to any of claims 1-15, **characterized in:**
- **that** the tool body (2) has a front end (2a) and an opposite rear end (2b), the rear end (2b) being configured for attachment to a machine, wherein a longitudinal centre axis (4) of the tool body (2) extends between the rear end (2b) and the front end (2a) of the tool body and wherein the tool body (2) has an axially forwardly facing front face (2c) at its front end (2a) and a peripheral surface (2d) that adjoins to the front face (2c) and extends from the front face (2c) towards the rear end (2b) of the tool body; and
- **that** said at least one insert seat (10) is provided in the tool body (2) at a transition between the front face (2c) and the peripheral surface (2d) of the tool body (2), wherein said space (11) in said at least one insert seat (10) is:
• open towards the front face (2c) of the tool body (2) in order to allow any one of said at least one indexable first cutting insert (30) and said at least one indexable second cutting insert (30'), when mounted in said at least one insert seat (10) in any of its working positions, to project in the axial direction of the tool body (2) beyond the front end (2a) thereof, and
• also open towards the peripheral surface (2d) of the tool body (2) in order to allow any one of said at least one indexable first cutting insert (30) and said at least one indexable second cutting insert (30'), when mounted in said at least one insert seat (10) in any of its working positions, to project in the radial direction of the tool body (2) beyond the peripheral surface (2d) thereof.

17. A cutting tool according to claim 16 in combination with any of claims 10-13, **characterized in that** said at least one rotation-preventing member (22), when mounted in said at least one insert seat (10), is located radially inwardly of one of the first and second rotation-preventing surfaces (20a, 20b) of the insert seat (10) and axially rearwardly of the other one of the first and second rotation-preventing surfaces (20a, 20b) of the insert seat (10).

18. A cutting tool according to claim 16 or 17, **characterized in that** said one or more side support surfaces (15a, 15b) on the internal wall (14) of said space (11) in said at least one insert seat (10) are two in number and consist of a substantially axially facing first side support surface (15a) and a substantially radially facing second side support surface (15b).

19. A cutting tool according to any of claims 1-18, **characterized in that** said at least one indexable first cutting insert (30) has 360°/n rotational symmetry about the centre axis (C) of the cutting insert, wherein n is an integer corresponding to the number of said indexing surfaces (41) included in the peripheral surface (37) of the cutting insert (30).

20. A cutting tool according to any of claims 1-19, **characterized in that** said at least one indexable second cutting insert (30') has 360°/m rotational symmetry about the centre axis (C) of the cutting insert, wherein m is an integer corresponding to the number of said indexing recesses (42) provided in the peripheral surface (37) of the cutting insert (30').

21. A cutting tool according to any of claims 1-20, **characterized in that** the bottom wall (12) of said space (11) in said at least one insert seat (10) forms part of shim plate (50) that is releasably fixed in the insert seat (10).

22. A cutting tool according to any of claims 1-21, **characterized in that** the bottom wall (12) of said space (11) in said at least one insert seat (10) is planar and extends in an imaginary plane that intersects the protruding part (24) of said at least one rotation-preventing member (22) when the rotation-preventing member (22) is mounted in the insert seat (10).

23. A cutting tool according to any of claims 1-22, **characterized in that** the cutting tool is a milling tool.
